# EUROPÄISCHE PATENTANMELDUNG

(11) **EP 4 668 031 A1**
(43) Veröffentlichungstag der Anmeldung: **24.12.2025**
(21) Anmeldenummer: 24183582.6
(22) Anmeldetag: 21.06.2024
(51) Int. Cl.: G05B 9/02

(54) **AUTOMATISIERUNGSANLAGE MIT EINEM FUNK-NOT-AUS-SYSTEM**

(71) Anmelder: Siemens Aktiengesellschaft, 80333 München (DE)
(72) Erfinder: Walter, Maximilian, 90408 Nürnberg (DE); Jaremenko, Christian, 91080 Spardorf (DE); Kahabka, Thomas, 91224 Pommelsbrunn (DE); Röttenbacher, Maren, 91171 Greding (DE)
(74) Vertreter: Siemens Patent Attorneys

(57) **Zusammenfassung**

Die Erfindung betrifft eine Automatisierungsanlage (1) mit einem Funk-Not-Aus-System, umfassend:
- einen ersten Anlagenteil (A1) mit einer ersten Sicherheitseinrichtung (SE1), welche ausgestaltet ist den ersten Anlagenteil (A1) von einem Normal-Betrieb (NB) in einen Sicherheits-Betrieb (SB) zu schalten, wenn ein erstes Sicherheitssignal (S1) vorliegt,
- einen zweiten Anlagenteil (A2) mit einer zweiten Sicherheitseinrichtung (SE2), welche ausgestaltet ist den zweiten Anlagenteil (A2) von einem Normal-Betrieb (NB) in einen Sicherheits-Betrieb (SB) zu schalten, wenn ein zweites Sicherheitssignal (S2) vorliegt,
- ein mobiles Nothalt-Befehlsgerät (11), welches ausgestaltet ist mit einem durch eine Person (P) schaltbaren Schaltmittel (3SU) ein Not-Signal (NS) über eine drahtlose Kommunikationsschnittstelle (Tx) abzusetzen,
- eine Steuereinrichtung (2) mit einer Empfängerschnittstelle (Rx) für das Not-Signal (NS),
- eine Detektionseinrichtung (3), welche ausgestaltet ist eine Position (x,y) des mobilen Nothalt-Befehlsgerät (11) zu ermitteln und an die Steuereinrichtung (2) zu übertragen,
- wobei die Steuereinrichtung (2) dazu ausgestaltet ist in Abhängigkeit von der Position (x,y) des mobilen Nothalt-Befehlsgerätes (11) eine Auswahl zu treffen, für welche Sicherheitseinrichtung (SE1,SE2) das Not-Signal (NS) zu verwenden ist und entsprechend der Abhängigkeit das erste Sicherheitssignal (S1) oder das zweite Sicherheitssignal (S2) zu erzeugen und an die entsprechende Sicherheitseinrichtung (SE1,SE2) zu übertragen.

## Beschreibung

Die Erfindung betrifft eine Automatisierungsanlage mit einem Funk-Not-Aus-System, umfassend:
einen ersten Anlagenteil mit einer ersten Sicherheitseinrichtung, welche ausgestaltet ist,
den ersten Anlagenteil von einem Normal-Betrieb in einen Sicherheits-Betrieb zu schalten, wenn ein erstes Sicherheitssignal vorliegt,
einen zweiten Anlagenteil mit einer zweiten Sicherheitseinrichtung, welche ausgestaltet ist, den zweiten Anlagenteil von einem Normal-Betrieb in einen Sicherheits-Betrieb zu schalten, wenn ein zweites Sicherheitssignal vorliegt, ein mobiles Nothalt-Befehlsgerät, welches ausgestaltet ist mit einem durch eine Person schaltbaren Schaltmittel ein Not-Signal über eine drahtlose Kommunikationsschnittstelle abzusetzen.

Der aktuelle Stand der Technik für Not-Halt-Befehlsgeräte sieht vor, dass diese fest einer bestimmten Maschine zugeordnet werden. Dies bedeutet, dass jedes Not-Halt-Gerät nur eine einzige Maschine steuern kann. Um sicherzustellen, dass es nicht zu Verwechslungen kommt, werden organisatorische Maßnahmen wie Arbeitsanweisungen implementiert. Diese Arbeitsanweisungen stellen sicher, dass das mobile Not-Halt-Gerät immer bei der entsprechenden Maschine bleibt und im Notfall korrekt betätigt wird. Diese Lösung hat jedoch Schwächen, da menschliche Fehler nicht vollständig ausgeschlossen werden können. Beispielsweise könnten die Geräte während einer Pause vertauscht werden, was zu gefährlichen Situationen führen kann, in denen im Gefahrenfall die falsche Maschine abgeschaltet wird, während die andere Maschine weiterläuft.

In der Praxis funktioniert das bestehende System nur dann zuverlässig, wenn die organisatorischen Maßnahmen strikt eingehalten werden.

Damit ergibt sich jedoch das Problem der Zuordnung, denn gibt es in einer Fabrik mehrere Maschinen mit mobilem Nothalt-Befehlsgerät, muss dafür gesorgt werden, dass die Benutzer im Gefahrenfall nicht erst überlegen müssen, welches Nothalt-Bediengerät zu betätigen ist.

Es ist eine Aufgabe der Erfindung dieses Problem zu lösen.

Die Aufgabe wird dadurch gelöst, dass eine Steuereinrichtung mit einer Empfängerschnittstelle für das Not-Signal mit einer Detektionseinrichtung zusammenarbeitet, diese ist dabei ausgestaltet eine Position des mobilen Nothalt-Befehlsgerät zu ermitteln und an die Steuereinrichtung zu übertragen,
wobei die Steuereinrichtung dazu ausgestaltet ist in Abhängigkeit von der Position des mobilen Nothalt-Befehlsgerätes eine Auswahl zu treffen, für welche Sicherheitseinrichtung das Not-Signal zu verwenden ist und entsprechend der Abhängigkeit das erste Sicherheitssignal oder das zweite Sicherheitssignal zu erzeugen und an die entsprechende Sicherheitseinrichtung zu übertragen.

Im Sinne der Erfindung ist unter Normal-Betrieb der eigentliche Produktiv-Betrieb einer Anlage zu verstehen und unter einem Sicherheits-Betrieb ist ein reduzierter Betrieb mit ungefährlichen Auswirkungen auf Menschen und Maschine zu verstehen, beispielsweise kann eine Verfahrgeschwindigkeit eines Roboters stark verlangsamt werden, aber auch das gänzliche Abschalten und Stillsetzen der Maschine oder des Anlagenteils kann gemeint sein.

Ist die Position des betätigten Nothalt-Befehlsgeräts bekannt, wird in der Steuerung ermittelt, welche Maschinen bzw. welche Anlagenteile stillgesetzt werden müssen.

Es wird ein System vorgeschlagen, dass Anforderungen von mobilen Nothalt-Befehlsgeräten zentral sammelt und dann an die betreffenden Maschinen oder Anlagenteile weiterleitet. Die Weiterleitung an die korrekte Maschine erfolgt dabei in Abhängigkeit der aktuellen Position des mobilen Nothalt-Befehlsgeräts.

Eine Ausführungsvariante sieht vor, dass die Detektionseinrichtung ausgestaltet ist mittels WiFi-Sensing, die Position bzw. den Aufenthaltsort des mobilen Nothalt-Befehlsgerätes zu ermitteln.

Eine weitere Ausführungsvariante sieht vor, dass die Detektionseinrichtung ausgestaltet ist, mittels Echtzeit-Funkortung basierend auf einer Ultraweit-Breitband-Technologie, die Position bzw. den Aufenthaltsort des mobilen Nothalt-Befehlsgerätes zu ermitteln, dabei weist das mobile Nothalt-Befehlsgerät einen Ortungstransponder auf.

Eine weitere Ausführungsvariante sieht in Ergänzung oder in Kombination oder auch als Einzellösung zur Ortung vor, dass die Detektionseinrichtung einen Personendetektor aufweist, welcher mit einem bildgebenden Sensor zur Aufnahme von digitalen Bilddateien oder von Punktewolken ausgestaltet ist, wobei eine Auswerteeinheit vorhanden ist, welche ausgestaltet ist die Bilddateien oder die Punktewolken auszuwerten und eine Positionsangabe der Person zu ermitteln, welche das mobile Nothalt-Befehlsgerät mitführt, weiterhin ausgestaltet die Positionsangabe der Person als die Position zu werten.

Voreilhafterweise weist die Steuereinrichtung eine Zuordnungstabelle auf und in der Zuordnungstabelle sind eine Mehrzahl von mobilen Nothalt-Befehlsgeräten einem Anlagenteil zugeordnet, wobei die mobilen Nothalt-Befehlsgeräte jeweils eine individuelle Kennung aufweisen.

Das vorgeschlagene System sammelt zentral Anforderungen mobiler Nothalt-Befehlsgeräte und leitet sie abhängig von der aktuellen Position des Geräts an die korrekten Maschinen weiter. Dies verhindert menschliche Fehler und steigert die Sicherheit, Effizienz und Flexibilität in Notfallsituationen.

Diese Lösung steigert die Sicherheit, da menschliche Fehler wie das Vertauschen der Nothalt-Befehlsgeräte vermieden werden. Zudem entfällt der Schulungsaufwand für organisatorische Maßnahmen und die Benutzer können sich freier bewegen, was die Effizienz erhöht. Darüber hinaus können mehrere Nothalt-Befehlsgeräte einer Maschine zugeordnet werden, wodurch die Wahrscheinlichkeit steigt, dass im Gefahrenfall ein Befehlsgerät zur Verfügung steht.

Ein weiterer Vorteil des neuen Systems ist, dass mehrere Nothalt-Befehlsgeräte einer Maschine zugeordnet werden können, was die Wahrscheinlichkeit erhöht, dass im Gefahrenfall ein Gerät zur Verfügung steht.

In der Steuereinrichtung sind erste Anlagenpositionsdaten vom ersten Anlagenteil und zweite Anlagenpositionsdaten vom zweiten Anlagenteil gespeichert, wobei weiterhin eine erste Menge aller Punkte einer ersten Ebene und eine zweite Menge aller Punkte einer zweiten Ebene abgespeichert sind, wobei die Steuereinrichtung dazu ausgestaltet ist zu prüfen, ob die Position des mobilen Nothalt-Befehlsgerätes in der ersten Menge oder in der zweiten Menge liegt und je nach Ergebnis das erste Sicherheitssignal oder das zweite Sicherheitssignal zu erzeugen und an die entsprechende Sicherheitseinrichtung zu übertragen.

Liegt die Position des betätigten Nothalt-Befehlsgeräts in einer bestimmten Ebene wird die zu dieser Ebene gehörige Maschine bzw. der Anlagenteil stillgesetzt.

Die Zeichnung zeigt ein Ausführungsbeispiel der Erfindung, dabei zeigt:
- FIG 1: eine Automatisierungsanlage,
- FIG 2: eine Zuordnungstabelle in einer Steuerungseinrichtung,
- FIG 3: eine Ausgestaltungsvariante zur Auffindung einer Position und
- FIG 4: eine Veranschaulichung der Mengenpunkte einer jeweiligen Ebene.

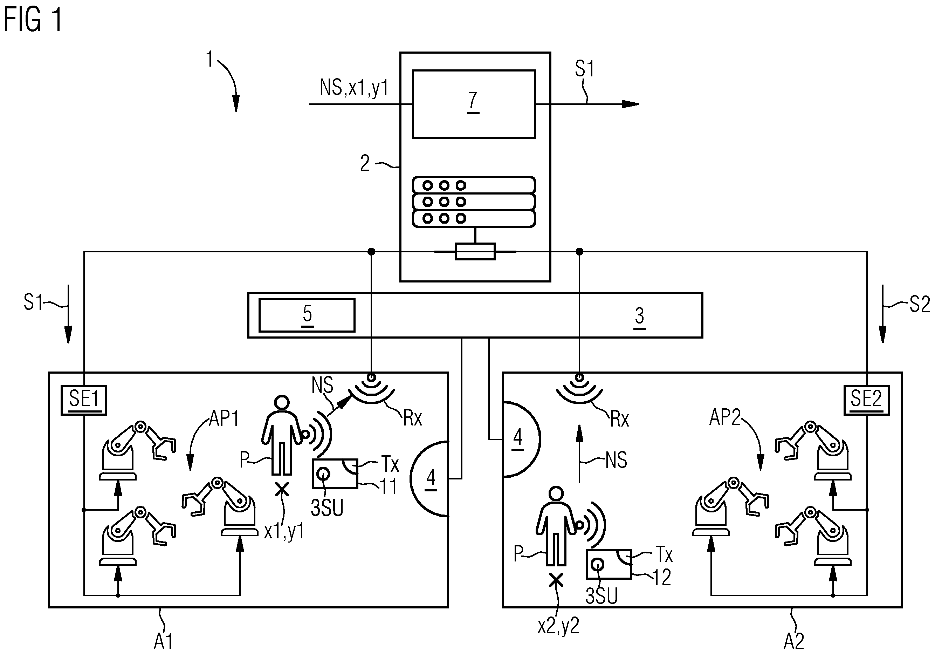

Gemäß FIG 1 ist eine Automatisierungsanlage 1 mit einem Funk-Not-Aus-System mit einem ersten Anlagenteil A1 und einem zweiten Anlagenteil A2 dargestellt. Der erste Anlagenteil A1 weist eine erste Sicherheitseinrichtung SE1 auf, welche ausgestaltet ist, den ersten Anlagenteil A1 von einem Normal-Betrieb NB in einen Sicherheitsbetrieb SB zu schalten. In diesem Beispiel bedeutet der Sicherheitsbetrieb SB ein gänzliches Not-Aus und damit eine Stillsetzung des ersten Anlagenteils A1. Der zweite Anlagenteil A2 weist ebenfalls eine zweite Sicherheitseinrichtung SE2 auf, welche ausgestaltet ist, den zweiten Anlagenteil A2 in einen Not-Aus-Betrieb zu versetzen, wenn ein zweites Sicherheitssignal S2 vorliegt.

Eine Person P befindet sich im ersten Anlagenteil A1 an einer Position x1,y1. Eine Person P' befindet sich im zweiten Anlagenteil A2 an einer Position x2,y2. Die Person P trägt ein erstes mobiles Nothalt-Befehlsgerät 11 mit sich. Die Person P' trägt ein zweites mobiles Nothalt-Befehlsgerät 12 mit sich. Mit diesen Nothalt-Befehlsgeräten 11,12 können die jeweiligen Personen über Funk ein Not-Signal NS absetzen. Das jeweilige mobile Nothalt-Befehlsgerät 11,12 ist ausgestaltet, mit einem durch eine Person P,P' schaltbaren Schaltmittel 3SU das Not-Signal NS über eine drahtlose Kommunikationsschnittstelle Tx abzusetzen.

Eine Steuereinrichtung 2 für die Automatisierungsanlage 1 weist eine Empfängerschnittstelle Rx für das Not-Signal NS auf. Eine Detektionseinrichtung 3 ist ausgestaltet, eine Position x1,y1 oder x2,y2 des mobilen Nothalt-Befehlsgerätes 11,12 zu ermitteln und an die Steuereinrichtung 2 weiter zu übertragen. Dabei ist die Steuereinrichtung 2 dazu ausgestaltet, in Abhängigkeit von der Position x1,y1 oder x2,y2 des mobilen Nothalt-Befehlsgerätes 11,12 eine Auswahl zu treffen, für welche Sicherheitseinrichtung SE1,SE2 das Not-Signal NS zu verwenden ist und entsprechend der Abhängigkeit, das erste Sicherheitssignal S1 oder das zweite Sicherheitssignal S2 zu erzeugen und an die entsprechende Sicherheitseinrichtung SE1,SE2 zu übertragen.

Bei der vorgeschlagenen Automatisierungsanlage mit dem Funk-Not-Aus-System ist es von Vorteil, dass nun eine zentrale Sammlung und Weiterleitung von Nothalt-Anforderungen basierend auf der Position der mobilen Nothalt-Befehlsgeräte 11,12 durchgeführt werden kann.

Im ersten Anlagenteil A1 befinden sich an einer ersten Anlagenposition AP1 mehrere Roboter-Greifarme. Im zweiten Anlagenteil A2 befinden sich an einer zweiten Anlagenposition AP2 ebenfalls mehrere Roboter-Greifarme. Will die Person P an der Position x1,y1 eine Nothalt provozieren, so drückt sie das Schaltmittel 3SU das Not-Signal NS wird über die Empfängerschnittstelle Rx aufgenommen, gleichzeitig detektiert die Detektionseinrichtung 3 die Position x1,y1. Die Detektionseinrichtung 3 kann entweder mittels einer Echtzeit-Funkortung basierend auf einer Ultraweitbreitbandtechnologie die Position x1,y1 ermitteln oder die Detektionseinrichtung 3 kann mittels eines Personendetektors 4, welcher mit einem bildgebenden Sensor zur Aufnahme von digitalen Bilddateien oder Punktewolken ausgestattet ist, die Position x1 ,y1 ermitteln. Eine Auswerteeinheit 5 ist dabei vorhanden, welche ausgestaltet ist, die Bilddateien oder die Punktewolken auszuwerten und eine Positionsangabe Pxy der Person P zu ermitteln, welche das mobile Nothalt-Befehlsgerät 11 mitführt, weiterhin ausgestaltet, die Positionsangabe Pxy der Person P als die Position x1,y1 zu werten.

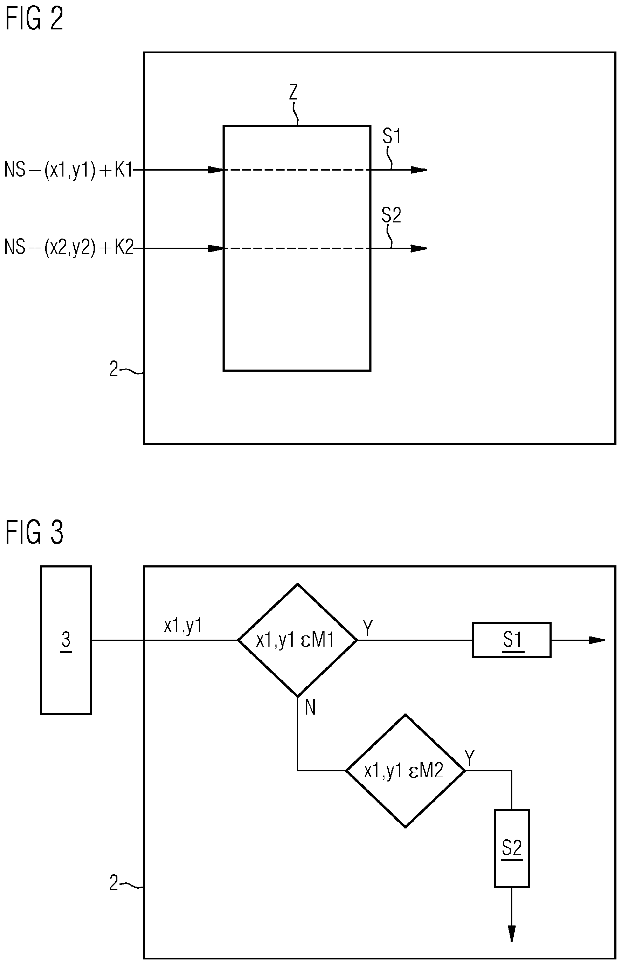

Die FIG 2 zeigt ein mögliches Ausführungsbeispiel der Steuereinrichtung 2 mit einer Zuordnungstabelle Z. Als Eingangsgröße bekommt die Zuordnungstabelle Z das Not-Signal NS plus die Position x1,y1 und die Kennung K1, daraus kann die Zuordnungstabelle Z identifizieren, dass das erste Sicherheitssignal S1 gemeint sein muss. Aus den Eingabedaten Not-Signal NS plus Position x2,y2 und Kennung K2 kann die Zuordnungstabelle Z schließen, dass das zweite Sicherheitssignal S2 gemeint sein muss.

Die FIG 3 zeigt eine alternative Ausgestaltung der Ermittlung der Sicherheitssignale S1,S2, wobei in der Steuereinrichtung 2 erste Anlagenpositionsdaten AP1 vom ersten Anlagenteil A1 und zweite Anlagenpositionsdaten AP2 vom zweiten Anlagenteil A2 hinterlegt sind. Eine erste Menge M1 aller Punkte einer ersten Ebene E1, welche der Fläche, beispielsweise der Halle des ersten Anlagenteils A1 entspricht, ist ebenfalls in der Steuereinrichtung 2 gespeichert. Auch ist eine zweite Menge M2 aller Punkte einer zweiten Ebene E2, welcher dem Hallenboden der Halle für den zweiten Anlagenteil A2 entspricht, in der Steuereinrichtung 2 gespeichert. Die Steuereinrichtung 2 ist nun dazu ausgestaltet, zu prüfen, ob die Position x1,y1 des mobilen Nothalt-Befehlsgerätes 11 in der ersten Menge M1 oder in der zweiten Menge M2 enthalten ist. Je nach Ergebnis entweder das erste Sicherheitssignal S1 oder das zweite Sicherheitssignal S2 zu erzeugen und an die entsprechende Sicherheitseinrichtung SE1,SE2 zu übertragen.

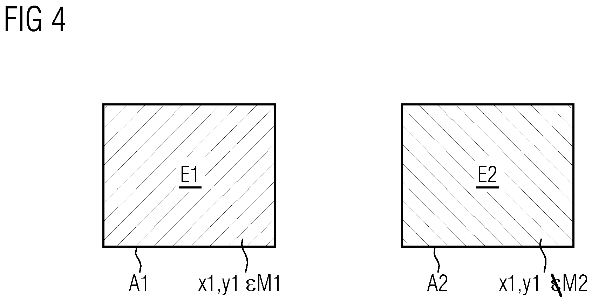

Die FIG 4 verdeutlich beispielsweise, den Hallenboden des ersten Anlagenteils A1 als eine erste Ebene E1 und den Hallenboden des zweiten Anlagenteils A2 als eine zweite Ebene E2. Mithilfe der Mengenprüfung kann geprüft werden, ob die Position x1,y1 ein Element E1 von der Menge M1 oder nicht Element von der Menge M2 ist.

## Patentansprüche

1. Automatisierungsanlage (1) mit einem Funk-Not-Aus-System, umfassend:
- einen ersten Anlagenteil (A1) mit einer ersten Sicherheitseinrichtung (SE1), welche ausgestaltet ist den ersten Anlagenteil (A1) von einem Normal-Betrieb (NB) in einen Sicherheits-Betrieb (SB) zu schalten, wenn ein erstes Sicherheitssignal (S1) vorliegt,
- einen zweiten Anlagenteil (A2) mit einer zweiten Sicherheitseinrichtung (SE2), welche ausgestaltet ist den zweiten Anlagenteil (A2) von einem Normal-Betrieb (NB) in einen Sicherheits-Betrieb (SB) zu schalten, wenn ein zweites Sicherheitssignal (S2) vorliegt,
- ein mobiles Nothalt-Befehlsgerät (11), welches ausgestaltet ist mit einem durch eine Person (P) schaltbaren Schaltmittel (3SU) ein Not-Signal (NS) über eine drahtlose Kommunikationsschnittstelle (Tx) abzusetzen,
- eine Steuereinrichtung (2) mit einer Empfängerschnittstelle (Rx) für das Not-Signal (NS),
- eine Detektionseinrichtung (3), welche ausgestaltet ist eine Position (x,y) des mobilen Nothalt-Befehlsgerät (11) zu ermitteln und an die Steuereinrichtung (2) zu übertragen,
- wobei die Steuereinrichtung (2) dazu ausgestaltet ist in Abhängigkeit von der Position (x,y) des mobilen Nothalt-Befehlsgerätes (11) eine Auswahl zu treffen, für welche Sicherheitseinrichtung (SE1,SE2) das Not-Signal (NS) zu verwenden ist und entsprechend der Abhängigkeit das erste Sicherheitssignal (S1) oder das zweite Sicherheitssignal (S2) zu erzeugen und an die entsprechende Sicherheitseinrichtung (SE1,SE2) zu übertragen.

2. Automatisierungsanlage (1) nach Anspruch 1, wobei die Detektionseinrichtung (3) ausgestaltet ist mittels WiFi-Sensing, die Position (x,y) bzw. den Aufenthaltsort des mobilen Nothalt-Befehlsgerätes (11) zu ermitteln.

3. Automatisierungsanlage (1) nach Anspruch 1 oder 2, wobei die Detektionseinrichtung (3) ausgestaltet ist mittels Echtzeit-Funkortung basierend auf einer Ultraweit-Breitband-Technologie die Position (x,y) bzw. den Aufenthaltsort des mobilen Nothalt-Befehlsgerätes (11) zu ermitteln, dabei weist das mobile Nothalt-Befehlsgerät (11) einen Ortungstransponder (O1) auf.

4. Automatisierungsanlage (1) nach einem der Ansprüche 1 bis 3, wobei die Detektionseinrichtung (3) einen Personendetektor (4) aufweist, welcher mit einem bildgebenden Sensor zur Aufnahme von digitalen Bilddateien oder von Punktewolken ausgestaltet ist, wobei eine Auswerteeinheit (5) vorhanden ist, welche ausgestaltet ist die Bilddateien oder die Punktewolken auszuwerten und eine Positionsangabe (Pxy) der Person (P) zu ermitteln, welche das mobile Nothalt-Befehlsgerät (11) mitführt, weiterhin ausgestaltet die Positionsangabe (Pxy) der Person (P) als die Position (x,y) zu werten.

5. Automatisierungsanlage (1) nach einem der Ansprüche 1 bis 4, wobei die Steuereinrichtung (2) eine Zuordnungstabelle (Z) aufweist und in der Zuordnungstabelle (Z) sind eine Mehrzahl von mobilen Nothalt-Befehlsgeräten (11,12,13) einem Anlagenteil (A1,A2) zugeordnet, wobei die mobilen Nothalt-Befehlsgeräten (11,12,13) jeweils eine individuelle Kennung (K1,K2,K3) aufweisen.

6. Automatisierungsanlage (1) nach einem der Ansprüche 1 bis 5, wobei in der Steuereinrichtung (2) erste Anlagenpositionsdaten (AP1) vom ersten Anlagenteil (A1) und zweite Anlagenpositionsdaten (AP2) vom zweiten Anlagenteil (A2) gespeichert sind, wobei weiterhin eine erste Menge (M1) aller Punkte einer ersten Ebene (E1) und eine zweite Menge (M2) aller Punkte einer zweiten Ebene (E2) abgespeichert sind, wobei die Steuereinrichtung (2) dazu ausgestaltet ist zu prüfen, ob die Position (x,y) des mobilen Nothalt-Befehlsgerätes (11) in der ersten Menge (M1) oder in der zweiten Menge (M2) liegt und je nach Ergebnis das erste Sicherheitssignal (S1) oder das zweite Sicherheitssignal (S2) zu erzeugen und an die entsprechende Sicherheitseinrichtung (SE1,SE2) zu übertragen.
